# EUROPÄISCHE PATENTSCHRIFT

(11) **EP 0 991 920 B1**
(45) Veröffentlichungstag und Bekanntmachung des Hinweises auf die Patenterteilung: **30.03.2016**
(21) Anmeldenummer: 99904722.8
(22) Anmeldetag: 22.01.1999
(51) Int. Cl.: G01F 1/684, G01F 15/12, G01F 5/00, G01F 1/72

(54) **MESSVORRICHTUNG ZUM MESSEN DER MASSE EINES IN EINER LEITUNG STRÖMENDEN MEDIUMS**
MEASURING DEVICE FOR MEASURING THE MASS OF A MEDIUM FLOWING IN A LINE
DISPOSITIF POUR MESURER LA MASSE D'UN FLUIDE S'ECOULANT DANS UNE CONDUITE

(30) Priorität: 08.04.1998 DE 19815654
(43) Veröffentlichungstag der Anmeldung: 12.04.2000
(73) Patentinhaber: ROBERT BOSCH GMBH, 70442 Stuttgart (DE)
(72) Erfinder: HECHT, Hans, D-70825 Korntal-Münchingen (DE); MÜLLER, Wolfgang, D-71277 Rutesheim (DE)
(86) Internationale Anmeldenummer: PCT/DE1999/000146
(87) Internationale Veröffentlichungsnummer: WO 1999/053274

(56) Entgegenhaltungen:
- EP-A- 0 566 479
- EP-A- 0 803 712
- DE-A- 4 106 842
- GB-A- 2 293 884

## Beschreibung

### Stand der Technik

Die Erfindung geht aus von einer Meßvorrichtung zum Messen der Masse eines in einer Leitung strömenden Mediums nach der Gattung des Hauptanspruchs. Es ist bereits aus der DE 44 07 209 C2 eine Meßvorrichtung bekannt, bei welcher ein Strömungskanal in einem Meßmodul integriert ist. Der Strömungskanal nimmt das Meßelement auf und verjüngt sich ausgehend von einer Einlaßöffnung in Strömungsrichtung zunehmend. An den verjüngten Abschnitt schließt sich der S-förmig ausgebildete Umlenkkanal an, der ein rechteckförmiges Querschnittsprofil hat. Das Meßmodul ist als steckbares Bauteil ausgebildet. Ein Trägerteil des Meßmoduls ist in die Wandung der zu messenden Leitung dichtend einsetzbar und nimmt eine elektronische Auswerteschaltung auf.

Als Meßelement eignet sich insbesondere ein mikromechanisches Bauelement, wie es z. B. aus der DE 43 38 891 A1 bekannt ist. Bei dem aus der DE 43 38 891 A1 bekannten Meßelement sind zwei temperaturempfindliche Widerstände integriert, die z. B. aus Siliziumoxid oder Siliziumnitrid bestehen kann und eine geringe Wärmeleitfähigkeit und eine geringe spezifische Wärmekapazität aufweist. Die beiden temperaturempfindlichen Widerstände sind durch einen Siliziumrahrnen voneinander thermisch isoliert. Während einer der temperaturabhängigen Widerstände als eigentlicher Meßsensor arbeitet, dient der zweite temperaturempfindliche Widerstand als Sensor für die Temperatur des strömenden Mediums.

Aus der DE 36 27 465 C2 ist es bekannt, ein Meßelement zum Messen der Luftmenge in einem Ansaugkanal gegenüber der Strömungsrichtung um einen vorgegebenen Winkel zu neigen, um das Anhaften von suspendierten Teilchen an dem Meßelement zu verringern. Ferner ist aus dieser Druckschrift bekannt, die dem Luftstrom zugewandten und abgewandten Stirnflächen des Meßelements mit keilförmigen Vorsprüngen zu versehen, ebenfalls um das Anhaften von suspendierten Teilchen des Luftstroms zu vermindern. Aus der DE 39 41 330 C2 ist es bekannt, die Oberfläche eines temperaturempfindlichen Meßelements um einen vorgegebenen Winkel gegenüber der Strömungsrichtung des zu messenden Mediums zu neigen. Da die Winkelabhängigkeit der Meßcharakteristik relativ groß ist, wenn das Meßelement nur geringfügig gegenüber der Strömungsrichtung geneigt ist oder im Extremfall parallel zur Strömungsrichtung ausgerichtet ist, jedoch die Winkelabhängigkeit der Meßcharakteristik bei größeren Neigungswinkeln zwischen der Meßoberfläche des Meßelements und der Strömungsrichtung des Mediums geringer ist, ergibt sich nach der Lehre dieser Druckschrift ein relativ zuverlässiges und reproduzierbares Meßergebnis, wenn der Winkel zwischen der Strömungsrichtung des Mediums und der Meßoberfläche des Meßelements in einem Bereich zwischen 20° und 80° liegt.

Die bekannten Meßvorrichtungen haben jedoch den Nachteil, daß das Meßelement durch in dem strömenden Medium transportierte Schmutzpartikel, insbesondere Staubkörnchen, zerstört werden kann, wenn die Schmutzpartikel mit dem Meßelement kollidieren. Insbesondere we1m mikromechanische Bauteile, wie sie beispielsweise In der DE 43 38 891 Al beschrieben sind, als Meßelemente Verwendung finden, können die Schmutzpartikel auf der relativ dünn ausgebildeten Membran auftreffen und diese nachhaltig schädigen. Daher kann es zu einem erhöhten Verschleiß des Meßelements und zu einem vorzeitigen Ausfall kommen. Ferner können sich öl- oder fetthaltige Schmutzpartikel auf dem Meßelement insbesondere auf dessen Membran niederschlagen, die als Haftvermittler für Festkörperpartikel, z. B. Staub oder Sandkörner, dienen und das Meßelement nachhaltig verschmutzen. Durch die Versehrnutzung ist die Wärmekopplung zwischen dem Meßelement und dem strömenden Medium gestört, so daß sich eine Verschiebung der Meßkennlinie gibt, was zwangsläufig zu Meßfehlern führt. Bei Verwendung der Meßvorrichtung zum Erfassen der Ansaugluft in dem Ansaugkanal einer Brennkraftmaschine kann es dabei z. B. zu einer fehlerhaften Ansteuerung der Brennstoffeinspritzventile und somit zu einer nicht optimalen Einstellung des Brennstoff-Luftgemisches kommen, so daß sich die Abgaswerte der Brennkraftmaschine mit zunehmender Verschmutzung des Meßelements verschlechtern.

Ein weiterer Nachteil bei der bekannten Meßvorrichtung besteht darin, daß die Meßgenauigkeit bei pulsierenden Strömungen in der zu messenden Leitung noch nicht optimal ist.

Aus der DE 41 06 842 A1 und aus der EP 0803 712 A2 sind jeweils Meßvorrichtungen zum Messen der Masse eines in einer Leitung strömenden Mediums mit einem vom strömenden Medium umströmten Messelement bekannt. Ein Strömungskanal der Meßvorrichtung erstreckt sich zwischen einer mit der Leitung verbundenen Einlassöffnung und zumindest einer stromsabwärts der Einalsöffnung in die Leitung mündenden Auslassöffnung entlang einer Hauptströmungsrichtung. An einer zwischen der Einlassöffnung und dme Meßelement angeordneten Trennstelle, verzweigt sich der Strömungskanal in einen Meßkanal, in dem das Meßelement angeordnet ist, und einen Umgehungskanal.

Aus der EP 0 369 592 A2 ist eine Meßvorrichtung zum Messen der Masse eines in einer Leitung strömenden Mediums mit einem vom strömenden Medium umströmten Meßelement bekannt, das in einem in der Leitung vorgesehenen Strömungskanal der Meßvorrichtung angeordnet ist, wobei sich der Strömungskanal zwischen einer mit der Leitung verbundenen Einlassöffnung und zumindest einer stromabwärts der Einlaßöffnung in die Leitung mündenden Auslassöffnung entlang einer Hauptströmungsrichtung erstreckt, wobei der Strömungskanal sich an einer zwischen der Einlaßöffnung und dem Messelement angeordneten Trennstelle in einen Messkanal, in welchem das Messelement angeordnet ist, und einen ersten Umgehungskanal, welcher das Messelement in der Hauptströmungsrichtung umgeht, verzweigt, wobei der Strömungskanal zwischen der Einlassöffnung und der Trennstelle einen ersten gekrümmten Abschnitt aufweist. Der Messkanal zweigt an der Trennstelle von dem Umgehungskanal ab und der erste Umgehungskanal schließt sich an einen peripheren Bereich mit relativ großem Krümmungsradius des ersten gekrümmten Abschnitts in Hauptströmungsrichtung an, wobei der Messkanal und der erste Umgehungskanal an räumlich getrennten Auslassöffnungen ausmünden.

### Vorteile der Erfindung

Die erfindungsgemäße Meßvorrichtung zum Messen der Masse eines in einer Leitung strömenden Mediums mit den kennzeichnenden Merkmalen des Anspruchs 1 hat 5 deingegenüber den Vorteil, daß eine Beaufschlagung des Meßelements mit in dem strömenden Medium mitgeführten Schmutzpartikeln weitgehend vermieden, zumindest aber verringert wird. Insbesondere die Membran eines als mikromechanisches Bauteil ausgebildeten Meßelements wird durch die erfindungsgemäße Maßnahme vor der Kollision mit in dem strömenden Medium mitgeführten Schmutzpartikeln weitgehend geschützt, so daß die Lebensdauer des Meßelements wesentlich verlängert wird. Durch die Aufteilung des Strömungskanals in einen Meßkanal, welcher das Meßelement aufnimmt, und in einen das Meßelement umgehenden Umgehungskanal wird erreicht, daß die Schmutzpartikel im wesentlichen durch den Umgehungskanal abgeführt und an dem Meßelement vorbeigeführt werden, während relativ wenig verunreinigtes Medium durch den Meßkanal an dem Meßelement vorbeigeführt wird. Dadurch wird die Gefahr der Kollision des Meßelements, insbesondere einer dünnen und empfindlichen Membran des Meßelements, mit den Schmutzpartikeln erheblich verringert. Da ferner das Auftreffen von öl- und fetthaltigen Schmutzpartikeln auf dem Meßelement verringert wird, wird eine Verschmutzung durch Anhaften von Staub und anderen Feststoffpartikeln auf dem Meßelement weitgehend verhindert. Auf diese Weise wird einer Veränderung der Kennlinie entgegengewirkt und die Zuverlässigkeit des erzielten Meßergebnisses erhöht. Bei der Verwendung der erfindungsgemäßen Meßvorrichtung zum Erfassen der Ansaugluftmasse einer Brennkraftmaschine werden daher die Abgaswerte der Brennkraftmaschine nicht nachhaltig verschlechtert.

Besonders vorteilhaft ist es, wenn der Strömungskanal zwischen der Einlaßöffnung und der Trennstelle, an welcher der Strömungskanal in den Meßkanal und den Umgehungskanal verzweigt, einen gekrümmten Abschnitt aufweist und sich der Meßkanal an einen inneren Bereich mit relativ kleinem Krümmungsradius und der Umgehungskanal an einem peripheren Bereich mit relativ großem Krümmungsradius des gekrümmten Abschnitts anschließt. Durch die auf die Schmutzpartikel in dem gekrümmten Abschnitt einwirkenden Fliehkräfte werden die Schmutzpartikel nach außen in den peripheren Bereich gedrängt, so daß der periphere Bereich des gekrümmten Abschnitts mit relativ vielen und der innere Bereich des gekrümmten Abschnitts mit relativ wenigen Schmutzpartikeln behaftet ist. Daher treten die meisten Schmutzpartikel in den an dem Meßelement vorbeiführenden Umgehungskanal und nicht in den Meßkanal ein und die Kontamination des das Meßelement umströmenden Mediums ist deutlich verringert.

Alternativ dazu ist es auch möglich, den Meßkanal bezüglich einer Längsachse der zu messenden Leitung gegenüber der Einlaßöffnung radial zu versetzen. Dadurch befindet sich der Meßkanal weitgehend außerhalb der Flugbahn der Schmutzpartikel, die sich im wesentlichen parallel zu der Längsachse der Leitung erstreckt und somit durch die Projektion der Einlaßöffnung parallel zu der Längsachse der Leitung vorgegeben ist.

Zwischen dem Meßkanal und dem Umgehungskanal kann eine Trennwand vorgesehen sein, wobei sich der Umgehungskanal und der Meßkanal stromabwärts des Meßelements entweder wieder vereinigen können und an einer gemeinsamen Auslaßöffnung austreten können oder der Meßkanal und der Umgehungskanal in der Meßvorrichtung als separate Kanäle mit getrennten Auslaßöffnungen weitergeführt werden können. Insbesondere wenn sich der Meßkanal und der Umgehungskanal stromabwärts des Meßelements wieder zu einem gemeinsamen Strömungskanal, z. B. einem S-förmigen Umlenkkanal vereinigen, ist es vorteilhaft, die Trennwand in Querschnittsprofil stromlinienförmig auszuformen, um Strömungsablösungen zu vermeiden und dem strömenden Medium einen möglichst geringen Strömungswiderstand entgegenzusetzen.

Die Auslaßöffnungen des Meßkanals und des Umgehungskanals sind vorzugsweise an einer Abströmseite der Meßvorrichtung angeordnet, die der an einer Anströmseite angeordneten Einlaßöffnung gegenüberliegt.

Besonders bevorzugt weist der Strömungskanal eine zweite Trennstelle auf, an der sich der Strömungskanal entgegen der Hauptströmungsrichtung in den Meßkanal und einen zweiten Umgehungskanal verzweigt. Insbesondere bei pulsierenden Strömungen, bei welchen eine Rückströmkomponente entgegen der Hauptströmungsrichtung auftritt ist, diese Maßnahme vorteilhaft, da dann auch in Rückströmrichtung eine Befreiung des an dem Meßelement vorbeiströmenden Mediums von Schmutzpartikeln erfolgt. Vorzugsweise ist dazu zwischen der Auslaßöffnung und der zweiten Trennstelle ein zweiter gekrümmter Abschnitt vorgesehen. Der erste gekrümmte Abschnitt und der zweite gekrümmte Abschnitt sind vorzugsweise symmetrisch zueinander ausgebildet, so daß auch bei stark rückwärts pulsierender Strömung ein nur relativ geringer Meßfehler auftritt. Dabei ergänzen sich die beiden gekrülrunten Abschnitte und der ebenfalls gekrümmte Meßkanal vorzugsweise zu einer einen Winkel von etwa 360° einschließenden Schleife.

### Zeichnung

Ausführungsbeispiele der Erfindung sind in der Zeichnung vereinfacht dargestellt und in der nachfolgenden Beschreibung näher erläutert. Es zeigen:
Fig. 1 eine nicht erfindungsgemäße Meßvorrichtung in einer geschnittenen Darstellung,
Fig. 2 eine weitere nicht erfindungsgemäße Meßvorrichtung in einer geschnittenen Darstellung,
Fig. 3 ein erstes Ausführungsbeispiel der erfindungsgemäßen Meßvorrichtung In einer geschnittenen Darstellung und
Fig. 4 ein zweites Ausführungsbeispiel der erfindungsgemäßen Meßvorrichtung in einer geschnittenen Darstellung.

### Beschreibung der Ausführungsbeispiele

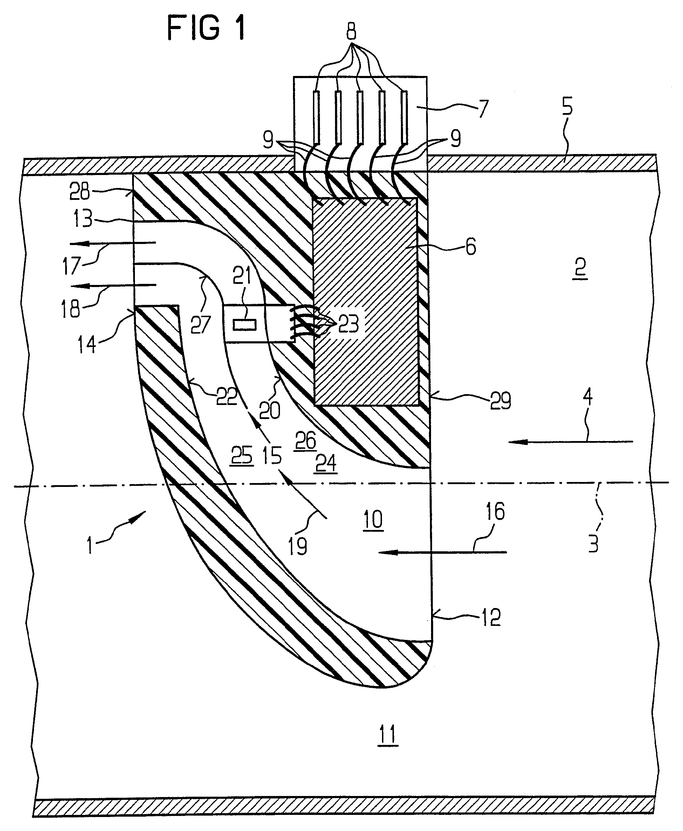

Fig. 1 zeigt In einer Schnittdarstellung eine Seitenansicht einer Meßvorrichtung 1, die zur Messung der Masse eines strömenden Mediums, insbesondere der Ansaugluftmasse von Brennkraftmaschinen, dient.

Die Meßvorrichtung 1 erfaßt die Masse eines in einer Leitung 2 strömenden Mediums. Die Leitung 2 ist lediglich schematisch dargestellt und erstreckt sich zumindest im Bereich der Meßvorrichtung 1 entlang einer Längsachse 3. Die Leitung 2 kann z. B. eine Ansaugleitung einer Brennkraftmaschine sein, über die die Brennkraftmaschine Luft aus der Umgebung ansaugen kann. In den dargestellten Ausführungsbeispielen strömt das Medium, z. B. die Ansaugluft, von rechts nach links durch die Leitung 2. Die Strömungsrichtung in der Leitung 2 ist durch einen Pfeil 4 gekennzeichnet.

Die Meßvorrichtung 1 hat vorzugsweise eine schlanke, sich radial in der Leitung 2 erstreckende Gestalt und kann vorzugsweise in einer aus der Wandung 5 der Leitung 2 ausgenommenen Öffnung, z. B. steckbar, eingeführt werden. Die Ausbildung der Meßvorrichtung 1 als in die Wandung 5 der Leitung 2 einsteckbares Steckmodul gestattet eine besonders einfach Montage und Wartung. In der Meßvorrichtung 1 kann entsprechend einer bevorzugten Ausgestaltung eine elektronische Auswerteschaltung 6 integriert, z. B. eingegossen, sein. Denkbar ist ebenso die Unterbringung einer elektronischen - Auswerteschaltung außerhalb von Wandung 5. An einem aus der Wandung 5 der Leitung 2 herausragenden Steckerabschnitt 7 können entsprechende Kontakte 8 für die Stromversorgung der Meßvorrichtung 1 und zum Abgreifen des von der Meßvorrichtung 1 gewonnenen Meßsignals vorgesehen sein, die über Verbindungsleitungen 9 mit der Auswerteschaltung 6 verbunden sind.

Die Meßvorrichtung 1 kann z. B. einstückig aus Kunststoff aus Kunststoff-Spritzgußteil hergestellt sein. Die Meßvorrichtung 1 weist einen Strömungskanal 10 auf, der in Art einer Bypass-Leitung parallel zu dein Hauptströmungsquerschnitt 11 der Leitung 2 angeordnet ist. Der Strömungskanal 10 erstreckt sich von einer Einlaßöffnung 12 zu einer oder mehreren Auslaßöffnungen. In Fig. 1 ist eine erste Auslaßöffnung 13 und eine zweite Auslaßöffnung 14 vorgesehen. Die
Hauptströmungsrichtungen an der Einlaßöffnung 12 ist durch einen Pfeil 16 und die Hauptströmungsrichtung an den Auslaßöffnungen 13 und 14 ist jeweils durch einen Pfeil 15 17 bzw. 18 gekennzeichnet. Die Hauptströmungsrichtung innerhalb des Strömungskanals ist durch einen Pfeil 19 angegeben.

Der Strömungskanal 10 zweigt an einer Trennstelle 15 in einen
Meßkanal 20, in welchem ein Meßelement 21 angeordnet ist, und einen das Meßelement 21 umgehenden Umgehungskanal 22.

Das Meßeleinent 21 ist über Verbindungsleitungen 23 mit der Auswerteschaltung 6 verbunden und vorzugsweise als mikromechanisches Bauteil ausgebildet, wie dies beispielsweise in der DE 43 38 891 Al vorgeschlagen ist. Das Meßelement 21 weist in an sich bekannter Weise zumindest eines vorzugsweise aber zwei temperaturempfindliche Widerstandselemente auf, die auf einer dielektrischen Membran , z. B. aus Siliziumoxid oder Siliziumnitrid ausgebildet sind. Die dielektrische Membran hat dabei den Vorteil einer nur geringen Wärmekapazität und einer relativ geringen thermischen Leitfähigkeit, so daß das Ansprechverhalten des Meßelements relativ kurz ist.

Das Meßelement 21 besitzt einen
plattenförmigen Trägerkörper auf Siliziumbasis, mit einem durch Ausätzen entstandenen membranförmigen Sensorbereich mit einer äußerst geringen Dicke und mehrere, ebenfalls durch Ausätzen entstandene Widerstandsschichten. Diese Widerstandsschichten bilden wenigstens einen temperaturabhängigen Meßwiderstand und beispielsweise einen Heizwiderstand. Vorzugsweise befindet sich in der Mitte der Membran der Heizwiderstand, der mit Hilfe eines Temperaturfühlers auf eine Übertemperatur geregelt wird. Stromauf und stromab des vom Heizwiderstand gebildeten Heizbereich befinden sich zwei, zum Heizbereich symmetrisch angeordnete Meßwiderstände. Der Trägerkörper des Meßelements 21 ist in einer Aussparung einer z. B. aus Metall bestehenden Aufnahme bündig in dieser untergebracht und z. B. durch Klebung gehalten. Die Aufnahme ragt in den Meßkanal 20 hinein, so daß das Meßelement 21 von dem durch den Meßkanal 20 der Meßvorrichtung 1 strömenden Medium umströmt wird.

In Fig. 1 befindet sich zwischen der Einlaßöffnung
und der Trennstelle 15 ein erster gekrümmter Abschnitt 24, der in Hauptströmungsrichtung 19 nach rechts gekrümmt ist. Dadurch
werden sich in der Leitung 2 befindliche Schmutzpartikel, die über die Einlaßöffnung 12 in den Strömungskanal 10 eindringen, aufgrund ihrer trägen Masse durch die Fliehkräfte nach außen in einen peripheren Bereich 25 des gekrümmten Abschnitts 24 gedrängt. Dabei können die Schmutzpartikel sowohl Flüssigkeitströpfchen, z. B. Wassertröpfchen oder Öltröpfchen, sein oder Feststoffpartikel, wie z. B. Staub. Der innere Bereich 26 des gekrümmten Abschnitts 24 hingegen ist aufgrund der durch die Fliehkräfte bedingten Verdrängung relativ wenig mit Schinutzpartikel kontaminiert.

Dadurch, daß sich der Meßkanal 20 an den inneren Bereich 26 des gekrümmten Abschnitts 24 anschließt und der das Meßelement 21 umgehende Umgehungskanal 22 hingegen sich in Hauptströmungsrichtung 19 an den peripheren Bereich 25 des gekrümmten Abschnitts 24 anschließt, wird erreicht, daß das besonders mit Schmutzpartikeln kontamminierte Medium des äußeren Bereichs 25 des gekrümmten Abschnitts 24 über die zweite Auslaßöffnung 14 in die Leitung 2 zurückgeführt wird, ohne daß die Gefahr besteht, daß die Schmutzpartikel auf das Meßelement 21 auftreffen und dieses schädigen können. Dies ist insbesondere wichtig, wenn das Meßelement 21 als mikromechanisches Bauteil wie zuvor beschrieben mit einem membranförmigen Sensorbereich ausgebildet ist, der hinsichtlich des Auftreffens von Schmutzpartikeln besonders sensibel ist. Durch diese Maßnahme wird gewissermaßen die Schmutzpartikel beinhaltende feste
oder flüssige Phase von der eigentlich zu messenden gasförmigen Phase des strömenden Mediums getrennt. Dadurch, daß das kontaminierte Medium über die zweite Auslaßöffnung 14 abgeführt wird , wird sichergestellt, daß sich die Schmutzpartikel in dem Umgehungskanal 22 oder in dem peripheren Bereich 25 des gekrümmten Abschnitts 24 nicht anlagern können und somit ein selbstreinigender Effekt gegeben ist.

In Fig. 1 sind der Meßkanal 20 und der
Umgehungskanal 22 durch eine lippenförmige, dünne Trennwand 27 getrennt. Der Meßkanal 20 und der Umgehungskanal 22 verlaufen weitgehend parallel zueinander und das den Meßkanal 20 durchströmende Medium und das den Umgehungskanal 22 durchströrnende Medium treten an getrennten, jedoch benachbarten Auslaßöffnungen 13 und 14 aus. Dabei sind die Auslaßöffnungen 13 und 14 an einer der Hauptströmungsrichtung 4 der Leitung 2 abgewandten Abströmseite 28 angeordnet, die einer der Hauptströmungsrichtung 4 der Leitung 2 zugewandten Anströmseite 29 gegenüberliegt, an welcher die Einlaßöffnung 12 angeordnet ist. Die Abströmseite 28 und der in Fig. 1 untere Bereich der Ausströmseite 29 weisen eine geschwungene Querschnittskonstante auf, die an die
Strömungsverhältnisse angepaßt ist. Die lippenförmige Trennwand 27 läßt sich fertigungstechnisch relativ einfach herstellen und ggf. auch nachträglich nach dem 10 Ausformen des Strömungskanals 10 in diesen einsetzen.

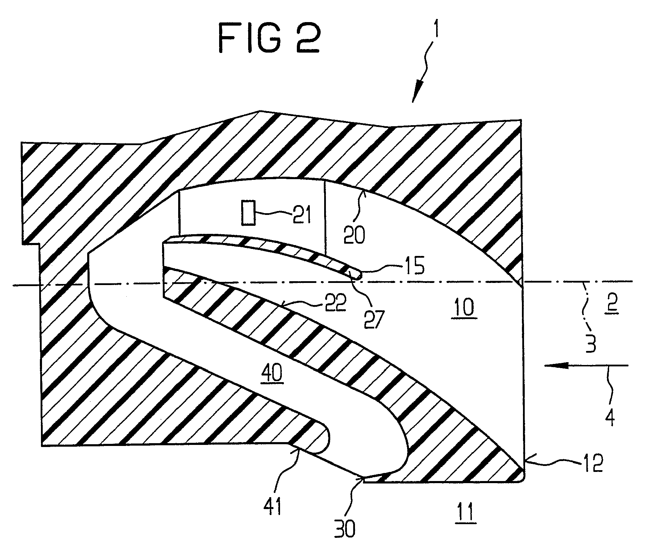

Fig. 2 eine Meßvorrichtung 1.
Bereits beschriebene oder sich entsprechende Elemente sind mit übereinstinmenden Bezugszeichen versehen.

Fig. 2 unterscheidet sich von dem anhand von
Fig. 1 beschriebenen Messvorrichtung einerseits dadurch, daß sich der das Meßelement 21 aufnehmende Meßkanal 20 und der das Meßelement 21 umgehende Umgehungskanal 22 stromabwärts der Trennwand 27 bzw stromabwärts des Meßelements wieder zu einem gemeinsamen Strömungskanal in Form eines S-förmigen Umlenkkanals 40 vereinigen. Die Auslaßöffnung 30 des Umlenkkanals 40 befindet sich in einem abgeschrägten, bezüglich der Hauptströmungsrichtung 4 der Leitung 2 abgeschatteten Abschnitt 41. Durch den Umlenkkanal 40 entstehen bei stark pulsierenden Strömungen auch mit einer relativ großen Rückströmkomponente nur geringe Meßfehler.

Außerdem erfolgt die Einleitung des stärker mit
Schmutzpartikeln kontaminierten Mediums in den Umgehungskanal 22 und des geringer oder vernachlässigbar mit Schmutzpartikeln kontaminierten Mediums in dem Meßkanal 20 nicht mittels eines gekrümmten Abschnitts 24 sondern dadurch, daß der Meßkanal 20 bezüglich der Längsachse 3 der Leitung 2 gegenüber der Einlaßöffnung 12 radial versetzt ist. Da die Flugbahn der Schmutzpartikel im wesentlichen parallel zu der Längsachse 3 der Leitung 2 ausgerichtet ist, gelangen nur relativ wenig Schmutzpartikel in den Meßkanal 20, wenn sich die Trennstelle 15 außerhalb der Projektion der Einlaßöffnung 12 parallel zu der Längsachse 3 der Leitung 2 befindet. Die Trennwand 27 ist stromlinienförmig ausgeformt , um
Strömungsablösungen zu vermeiden und dein strömenden Medium einen möglichst geringen Strömungswiderstand entgegenzusetzen.

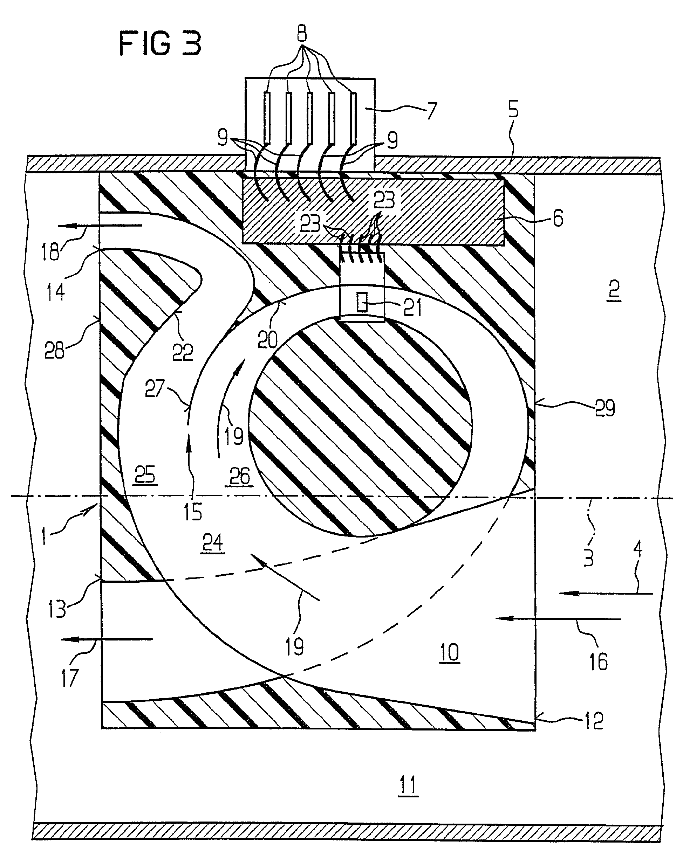

Fig. 3 zeigt ein erstes Ausführungsbeispiel der erfindungsgemäßen Meßvorrichtung. Auch in Fig. 3 sind bereits beschriebene oder sich entsprechende Elemente mit übereinstimmenden Bezugszeichen versehen, um die Zuordnung zu erleichtern.

In ähnlicher Weise wie in Fig. 1 verzweigt sich
der Strömungskanal 10 in Hauptströmungsrichtung 19 in den Meßkanal 20, in welchem das Meßelement 21 angeordnet ist, und den Umgehungskanal 22. Der Meßkanal 20 und der erste Umgehungskanal 22 sind in Hauptströmungsrichtung 19 stromabwärts der Trennstätte 15 gegensinnig zueinander gekrümmt, so daß der Umgehungskanal 22 zu der zweiten Auslaßöffnung 14 an der Abströmseite 28 der Meßvorrichtung 1 auf relativ kurzem Wege führt. In der bereits beschriebenen Weise schließt sich der Meßkanal 20 an einen inneren Bereich 26 und der Umgehungskanal 22 an einen peripheren Bereich des gekrümmten Abschnitts 24 an, so daß aufgrund der auf die Schmutzpartikel einwirkenden Fliehkräfte diese vorwiegend in den Umgehungskanal 22 eindringen und nicht zu dem Meßelement 21 gelangen. Die Krümmung des gekrümmten Abschnitts 24 setzt sich in dem Meßkanal 20 fort und der Meßkanal 20 bildet zusammen mit dein gekrümmten Abschnitt 24 eine sich von der Einlaßöffnung 19 zu der ersten Auslaßöffnung 13 erstreckende Schleife, die einen Winkel von etwa 360° einschließt.

Das Meßelernent 21 wird bei diesem Ausführungsbeispiel entgegen der Hauptströmungsrichtung 4 in der Leitung 2 angeströmt und der Meßkanal 20 wird in einer Umlenkung fortgeführt und an der Auslaßöffnung 13 in gegenüber der Einlaßöffnung 12 etwa gleicher axialer Position, jedoch entsprechend der Breite des Strömungskanals 10 seitlich versetzt, in die Leitung 2 zurückgeleitet Dadurch entsteht eine nahezu symmetrische Ausgestaltung des Meßkanals 20 wodurch die von der erfindungsgemäßen Meßvorrichtung1 erfaßte Masse des strömenden Mediums weitgehend unabhängig von der Strömungsrichtung ist. Dies ist insbesondere bei stark pulsierenden Strömungen mit einer relativ großen Rückströmkomponente wichtig, wie dies z. B. in der Ansaugleitung einer Brennkraftmaschine vorkommt. Evtl. auftretende Strömungsphänomene in der Nähe des Sensors können jedoch dazu führen, die Ausgestaltung des Meßkanals 20 gezielt unsymmetrisch zu gestalten, ohne die Vorteile bei großer Rückströmkomponente zu verlieren.

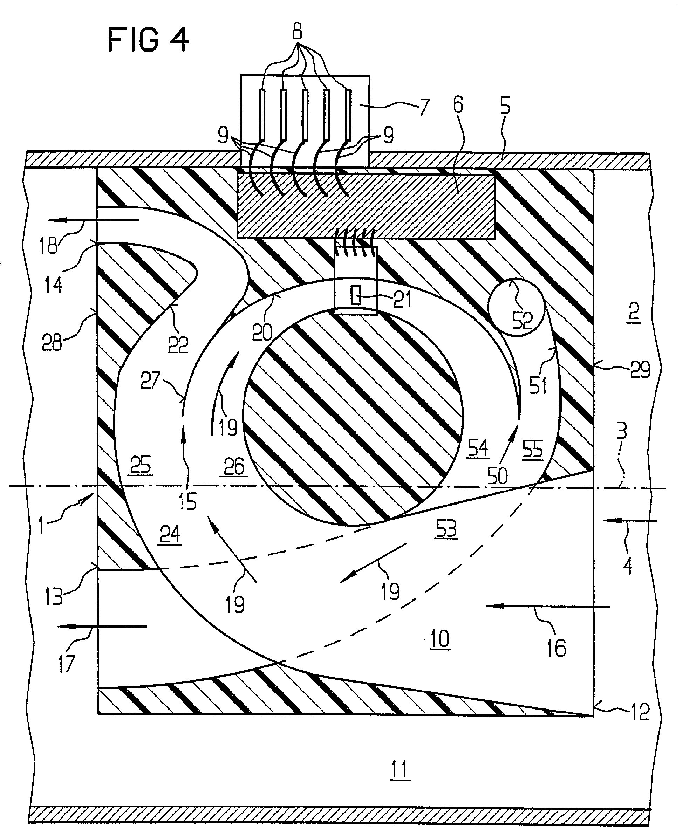

Fig. 4 zeigt ein zweites Ausführungsbeispiel der erfindungsgemäßen Meßvorrichtung 1. Auch hier sind bereits beschriebene oder sich entsprechende Elemente mit übereinstimmenden Bezugszeichen versehen, so daß sich insoweit eine Wiederholung erübrigt.

Das in Fig. 4 dargestellte Ausführungsbeispiel entspricht weitgehend dem bereits anhand von Fig . 3 dargestellten Ausführungsbeispiel. Eine Besonderheit besteht insofern, als daß nicht nur eine erste Trennstelle 15 vorgesehen ist an welcher sich der Strömungskanal 10 in der Hauptströmungsrichtung 19 in den Meßkanal 20 und einen ersten an der Auslaßöffnung 14 ausmündenden, das Meßelement 21 umgehenden ersten Umgehungskanal 22 verzweigt. Vielmehr ist zwischen dem Meßelement 21 und der ersten Auslaßöffnung 13 eine zweite Trennstelle 15 vorgesehen, an welcher sich der Strömungskanal 10 entgegen der Hauptströmungsrichtung 19 in den Meßkanal 20, in welchem das Meßelement 21 angeordnet ist, und einen das Meßelement 21 umgehenden zweiten Umgehungskanal 51 verzweigt. Im dargestellten Ausführungsbeispiel mündet der zweite Umgehungskanal 51 an einer im wesentlichen parallel zu der Längsachse 3 der Leitung 2 angeordneten Seitenfläche der Meßvorrichtung 1 in die Leitung 2 an einer dritten Auslaßöffnung 52 aus. Der zweite Utngehungskanal 51 ist daher ebenfalls auf relativ kurzem Wege zu der zugeordneten Auslaßöffnung 52 geführt. Die kurzen Wege der beiden Umgehungskanäle 22 und 51 verhindern eine Anlagerung der Schmutzpartikel.

Ferner ist bei dem in Fig. 4 dargestellten Ausführungsbeispiel ein zweiter gekrümmter Abschnitt 53 vorgesehen, der zwischen der ersten Auslaßöffnung 13 und der zweiten Trennstelle 50 angeordnet ist. Der Meßkanal 20 schließt sich dabei an einen inneren Bereich 54 mit relativ kleinem Krümmungsradius des zweiten gekrümmten Abschnitts 53 entgegen der Hauptströmungsrichtung 19 an, während sich der zweite Umgehungskanal 51 an einen peripheren Bereich 55 mit relativ großem Krümmungsradius des zweiten gekrümmten Abschnitts 53 entgegen der Hauptströmungsrichtung 19 anschließt.

Der Zweck der zweiten Trennstelle 50 und des zweiten Umgehungskanals 51 besteht darin, auch bei stark pulsierenden Strömungen mit einer relativ großen Rückströmkomponente entgegen der Hauptströmungsrichtung 19 in gleicher Weise wie an der ersten Trennstelle 15 zu gewährleisten, das durch die zweite Auslaßöffnung 13 während der Rückströmung eintretende Schmutzpartikel aufgrund der Fliehkräfte nicht in den Meßkanal 20 sondern in den zweiten Umgehungskanal 51 gelangen und unter Umgehung des Meßelements 21 an der dritten Auslaßöffnung 52 austreten. Auf diese Weise werden auch während der Rückströmung kurzzeitig entgegen der Hauptströmungsrichtung 19 strömende Schmutzpartikel sicher von dem Meßelement 21 ferngehalten.

Vorzugsweise sind der erste gekrümmte Abschnitt 24 und der zweite gekrümmte Abschnitt 53 des Strömungskanals 10 im wesentlichen symmetrisch zueinander ausgebildet. Ferner ergänzen sich vorzugsweise der erste gekrümmte Abschnitt 24, der Meßkanal 20 und der zweite gekrümmte Abschnitt 53 zu einer Schleife, die einen Winkel von etwa 360° einschließt.

Die Erfindung ist nicht auf die dargestellten Ausführungsbeispiele beschränkt. Der Meßkanal 20 und die Umgehungskanäle 22 und 52 können auch in anderer Weise ausgebildet sein, wenn dies für den entsprechenden Anwendungsfall zweckdienlich ist. Ggf. kann es vorteilhaft sein, auch die dritte Auslaßöffnung 52 an der Abströmseite 28 der Meßvorrichtung vorzusehen und den zweiten Umgehungskanal 51 entsprechend zu 10 verlängern. Die erfindungsgemäße Meßvorrichtung eignet sich sowohl zur Messung der Masse von gasfönnigen als auch von flüssigen strömenden Medien.

## Patentansprüche

1. Messvorrichtung (1) zum Messen der Masse eines in einer Leitung (2) strömenden Mediums, insbesondere der Ansaugluftmasse einer Brennkraftmaschine, mit einem vom strömenden Medium umströmten Messelement (21), das in einem in der Leitung (2) vorgesehenen Strömungskanal (10) der Messvorrichtung (1) angeordnet ist, wobei sich der Strömungskanal (10) zwischen einer mit der Leitung (2) verbundenen Einlassöffnung (12) und zumindest einer stromabwärts der Einlassöffnung (12) in die Leitung (2) mündenden Auslassöffnung (13) entlang einer Hauptströmungsrichtung (19) erstreckt, wobei der Strömungskanal (10) sich an einer zwischen der Einlassöffnung (12) und dem Messelement (21) angeordneten ersten Trennstelle (15) in einen Messkanal (20), in welchem das Messelement (21) angeordnet ist, und einen ersten Umgehungskanal (22), welcher das Messelement (21) in der Hauptströmungsrichtung (19) umgeht, verzweigt, wobei der Strömungskanal (10) zumindest zwischen der Einlassöffnung (12) und der ersten Trennstelle (15) einen ersten gekrümmten Abschnitt (24) aufweist und dass sich der Messkanal (20) an einen inneren Bereich (26) mit relativ kleinerem Krümmungsradius des ersten gekrümmten Abschnitts (24) in Hauptströmungsrichtung (19) anschließt und sich der erste Umgehungskanal (22) an einen peripheren Bereich (25) mit relativ großem Krümmungsradius des ersten gekrümmten Abschnitts (24) in Hauptströmungsrichtung (19) anschließt, wobei der Messkanal (20) und der erste Umgehungskanal (22) an räumlich getrennten Auslassöffnungen (13, 14) ausmünden, **dadurch gekennzeichnet, dass** der Messkanal (20) und der erste Umgehungskanal (22) in einem Bereich in Hauptströmungsrichtung (19) stromabwärts der ersten Trennstelle (15) gegensinnig gekrümmt verlaufen und dass sich die Krümmung des gekrümmten Abschnitts (24) in dem Messkanal (20) fortsetzt und der Messkanal (20) zusammen mit dem gekrümmten Abschnitt (24) eine sich von der Einlassöffnung (19) zur der Auslassöffnung (13) erstreckende Schleife, die einen Winkel von etwa 360° einschließt, bildet.

2. Messvorrichtung nach Anspruch 1, **dadurch gekennzeichnet, dass** der Messkanal (20) bezüglich einer Längsachse (3) der Leitung (2) gegenüber der Einlassöffnung (12) radial versetzt ist.

3. Messvorrichtung nach Anspruch 1 oder 2, **dadurch gekennzeichnet, dass** in Hauptströmungsrichtung (19) stromabwärts der ersten Trennstelle (15) zwischen dem Messkanal (20) und dem ersten Umgehungskanal (22) eine Trennwand (27) angeordnet ist.

4. Messvorrichtung nach Anspruch 3, **dadurch gekennzeichnet, dass** sich der Messkanal (20) und der erste Umgehungskanal (22) in Hauptströmungsrichtung (19) stromabwärts des Messelements (21) wieder vereinigen.

5. Messvorrichtung nach Anspruch 4, **dadurch gekennzeichnet, dass** die Trennwand (27) im Querschnittsprofil stromlinienförmig ausgeformt ist.

6. Messvorrichtung nach Anspruch 1, **dadurch gekennzeichnet, dass** die Einlassöffnung (12) an einer Anströmseite (29) der Messvorrichtung (1) und die Auslassöffnung (13,14) des Messkanals (20) und des ersten Umgehungskanals (22) an einer der Anströmseite (29) gegenüber liegenden Abströmseite (28) der Messvorrichtung (1) angeordnet sind.

7. Messvorrichtung nach einem der Ansprüche 1 bis 6, **dadurch gekennzeichnet, dass** der Strömungskanal (10) sich an einer zwischen einer Auslassöffnung (13) und dem Messelement (21) angeordneten zweiten Trennstelle (50) in den Messkanal (20) mit dem Messelement (21) und einen zweiten Umgehungskanal (51), welcher das Messelement (21) entgegen der Hauptströmungsrichtung (19) umgeht, verzweigt.

8. Messvorrichtung nach Anspruch 7, **dadurch gekennzeichnet, dass** der Strömungskanal (10) zwischen der Auslassöffnung (13) und der zweiten Trennstelle (50) einen zweiten gekrümmten Abschnitt (53) aufweist und dass sich der Messkanal (20) an einen inneren Bereich (54) mit relativ kleinerem Krümmungsradius des zweiten gekrümmten Abschnitts (53) entgegen der Hauptströmungsrichtung (19) anschießt und sich der zweite Umgehungskanal (51) an einen peripheren Bereich (55) mit relativ großem Krümmungsradius des zweiten gekrümmten Abschnitts (53) entgegen der Hauptströmungsrichtung (19) anschließt.

9. Messvorrichtung nach Anspruch 8, **dadurch gekennzeichnet, dass** der erste gekrümmte Abschnitt (24) und der zweite gekrümmte Abschnitt (53) des Strömungskanals (10) im wesentlichen symmetrisch zueinander ausgebildet sind.

10. Messvorrichtung nach Anspruch 8 oder 9, **dadurch gekennzeichnet, dass** der Messkanal (20) zumindest abschnittsweise gekrümmt ausgebildet ist, und dass sich der erste gekrümmte Abschnitt (24) und der zweite gekrümmte Abschnitt (53) des Strömungskanals (10) mit dem gekrümmten Messkanal (20) zu einer Schleife ergänzen, die einen Winkel von etwa 360° einschließt.

11. Messvorrichtung nach einem der Ansprüche 7 bis 10, **dadurch gekennzeichnet, dass** der zweite Umgehungskanal (51) an einer im wesentlichen parallel zu einer Längsachse (3) der Leitung (2) angeordneten Seitenfläche der Messvorrichtung (1) in die Leitung (2) ausmündet.

## Claims

1. Measurement device (1) for measuring the mass of a medium flowing in a line (2), in particular the intake air mass of an internal combustion engine, having a measurement element (21) around which the flowing medium flows, which measurement element is arranged in a flow duct (10), provided in the line (2), of the measurement device (1), wherein the flow duct (10) extends along a main flow direction (19) between an inlet opening (12), which is connected to the line (2), and at least one outlet opening (13), which opens into the line (2) downstream of the inlet opening (12), wherein, at a first parting point (15) arranged between the inlet opening (12) and the measurement element (21), the flow duct (10) branches into a measurement duct (20), in which the measurement element (21) is arranged, and a first bypass duct (22), which bypasses the measurement element (21) in the main flow direction (19), wherein the flow duct (10) has a first curved section (24) at least between the inlet opening (12) and the first parting point (15), and in that the measurement duct (20) adjoins, in the main flow direction (19), an inner region (26) of relatively small radius of curvature of the first curved section (24), and the first bypass duct (22) adjoins, in the main flow direction (19), a peripheral region (25) of relatively large radius of curvature of the first curved section (24), wherein the measurement duct (20) and the first bypass duct (22) open out at spatially separate outlet openings (13, 14), **characterized in that**, in a region downstream of the first parting point (15) in the main flow direction (19), the measurement duct (20) and the first bypass duct (22) run so as to be curved in opposite directions, and **in that** the curvature of the curved section (24) continues in the measurement duct (20), and the measurement duct (20) together with the curved section (24) forms a loop which extends from the inlet opening (19) to the outlet opening (13) and which encloses an angle of approximately 360°.

2. Measurement device according to Claim 1, **characterized in that** the measurement duct (20) is offset radially relative to the inlet opening (12) with respect to a longitudinal axis (3) of the line (2).

3. Measurement device according to Claim 1 or 2, **characterized in that**, downstream of the first parting point (15) in the main flow direction (19), a partition (27) is arranged between the measurement duct (20) and the first bypass duct (22).

4. Measurement device according to Claim 3, **characterized in that** the measurement duct (20) and the first bypass duct (22) merge again downstream of the measurement element (21) in the main flow direction (19).

5. Measurement device according to Claim 4, **characterized in that** the partition (27) is of streamlined form in cross-sectional profile.

6. Measurement device according to Claim 1, **characterized in that** the inlet opening (12) is arranged at an inflow side (29) of the measurement device (1), and the outlet openings (13, 14) of the measurement duct (20) and of the first bypass duct (22) are arranged at an outflow side (28), situated opposite the inflow side (29), of the measurement device (1).

7. Measurement device according to one of Claims 1 to 6, **characterized in that**, at a second parting point (50) arranged between an outlet opening (13) and the measurement element (21), the flow duct (10) branches into the measurement duct (20), with the measurement element (21), and a second bypass duct (51), which bypasses the measurement element (21) counter to the main flow direction (19).

8. Measurement device according to Claim 7, **characterized in that** the flow duct (10) has a second curved section (53) between the outlet opening (13) and the second parting point (50), and **in that** the measurement duct (20) adjoins, counter to the-main flow direction (19), an inner region (54) of relatively small radius of curvature of the second curved section (53), and the second bypass duct (51) adjoins, counter to the main flow direction (19), a peripheral region (55) of relatively large radius of curvature of the second curved section (53).

9. Measurement device according to Claim 8, **characterized in that** the first curved section (24) and the second curved section (53) of the flow duct (10) are formed substantially symmetrically with respect to one another.

10. Measurement device according to Claim 8 or 9, **characterized in that** the measurement duct (20) is of curved form at least in sections, and **in that** the first curved section (24) and the second curved section (53) of the flow duct (10) supplement the curved measurement duct (20) to form a loop which encloses an angle of approximately 360°.

11. Measurement device according to one of Claims 7 to 10, **characterized in that** the second bypass duct (51) opens into the line (2) at a side surface, arranged substantially parallel to a longitudinal axis (3) of the line (2), of the measurement device (1).

## Revendications

1. Dispositif de mesure (1) pour mesurer la masse d'un milieu en circulation dans une conduite (2), en particulier la masse d'air d'admission d'un moteur à combustion interne, comprenant un élément de mesure (21) parcouru par le milieu en circulation, lequel est disposé dans un canal d'écoulement (10) du dispositif de mesure (1) prévu dans la conduite (2), le canal d'écoulement (10) s'étendant entre une ouverture d'entrée (12) connectée à la conduite (2) et au moins une ouverture de sortie (13) débouchant en aval de l'ouverture d'entrée (12) dans la conduite (2) le long d'une direction d'écoulement principale (19), le canal d'écoulement (10) se ramifiant au niveau d'un premier point de séparation (15) disposé entre l'ouverture d'entrée (12) et l'élément de mesure (21) en un canal de mesure (20) dans lequel est disposé l'élément de mesure (21) et un premier canal de contournement (22) qui contourne l'élément de mesure (21) dans la direction d'écoulement principale (19), le canal d'écoulement (10) présentant une première portion courbe (24) au moins entre l'ouverture d'entrée (12) et le premier point de séparation (15) et le canal de mesure (20) se raccordant à une région interne (26) de rayon de courbure relativement petit de la première portion courbe (24) dans la direction d'écoulement principale (19) et le premier canal de contournement (22) se raccordant à une région périphérique (25) de relativement grand rayon de courbure de la première portion courbe (24) dans la direction d'écoulement principale (19), le canal de mesure (20) et le premier canal de contournement (22) débouchant au niveau d'ouvertures de sortie séparées spatialement (13, 14), **caractérisé en ce que** le canal de mesure (20) et le premier canal de contournement (22) s'étendent sous forme courbe dans des sens opposés dans une région dans la direction d'écoulement principale (19) en aval du premier point de séparation (15) et **en ce que** la courbure de la portion courbe (24) se poursuit dans le canal de mesure (20) et le canal de mesure (20) conjointement avec la portion courbe (24) forment une boucle s'étendant depuis l'ouverture d'entrée (19) jusqu'à l'ouverture de sortie (13), laquelle forme un angle d'environ 360°.

2. Dispositif de mesure selon la revendication 1, **caractérisé en ce que** le canal de mesure (20) est décalé radialement par rapport à un axe longitudinal (3) de la conduite (2) par rapport à l'ouverture d'entrée (12).

3. Dispositif de mesure selon la revendication 1 ou 2, **caractérisé en ce que** dans la direction d'écoulement principale (19) en aval du premier point de séparation (15) entre le canal de mesure (20) et le premier canal de contournement (22) est disposée une paroi de séparation (27).

4. Dispositif de mesure selon la revendication 3, **caractérisé en ce que** le canal de mesure (20) et le premier canal de contournement (22) se réunissent à nouveau dans la direction d'écoulement principale (19) en aval de l'élément de mesure (21).

5. Dispositif de mesure selon la revendication 4, **caractérisé en ce que** la paroi de séparation (27) a un profil aérodynamique en section transversale.

6. Dispositif de mesure selon la revendication 1, **caractérisé en ce que** l'ouverture d'entrée (12) est disposée au niveau d'un côté d'afflux (29) du dispositif de mesure (1) et l'ouverture de sortie (13, 14) du canal de mesure (20) et du premier canal de contournement (22) est disposée au niveau d'un côté de sortie (28) du dispositif de mesure (1) opposé au côté d'afflux (29).

7. Dispositif de mesure selon l'une quelconque des revendications 1 à 6, **caractérisé en ce que** le canal d'écoulement (10) se ramifie au niveau d'un deuxième point de séparation (50) disposé entre une ouverture de sortie (13) et l'élément de mesure (21) en le canal de mesure (20) avec l'élément de mesure (21) et en un deuxième canal de contournement (51) qui contourne l'élément de mesure (21) dans le sens opposé à la direction d'écoulement principale (19).

8. Dispositif de mesure selon la revendication 7, **caractérisé en ce que** le canal d'écoulement (10) entre l'ouverture de sortie (13) et le deuxième point de séparation (50) présente une deuxième portion courbe (53) et **en ce que** le canal de mesure (20) se raccorde au niveau d'une région interne (54) de relativement plus petit rayon de courbure de la deuxième portion courbe (53) dans le sens opposé à la direction d'écoulement principale (19) et le deuxième canal de contournement (51) se raccorde à une région périphérique (55) de relativement grand rayon de courbure de la deuxième portion courbe (53) dans le sens opposé à la direction d'écoulement principale (19).

9. Dispositif de mesure selon la revendication 8, **caractérisé en ce que** la première portion courbe (24) et la deuxième portion courbe (53) du canal d'écoulement (10) sont réalisées de manière essentiellement symétrique l'une par rapport à l'autre.

10. Dispositif de mesure selon la revendication 8 ou 9, **caractérisé en ce que** le canal de mesure (20) est réalisé au moins en partie sous forme courbe et **en ce que** la première portion courbe (24) et la deuxième portion courbe (53) du canal d'écoulement (10) avec le canal de mesure courbe (20) se complètent pour former une boucle qui forme un angle d'environ 360°.

11. Dispositif de mesure selon l'une quelconque des revendications 7 à 10, **caractérisé en ce que** le deuxième canal de contournement (51) débouche dans la conduite (2) au niveau d'une surface latérale du dispositif de mesure (1) disposée essentiellement parallèlement à un axe longitudinal (3) de la conduite (2).
